Europäisches Patentamt

European Patent Office

Office européen des brevets

(11) Publication number: **0 137 213**
**B1**

(12) **EUROPEAN PATENT SPECIFICATION**

(45) Date of publication of patent specification: **12.04.89**

(21) Application number: **84109566.4**

(22) Date of filing: **10.08.84**

(51) Int. Cl.⁴: **H 04 L 25/03**

(54) **Adaptive equalizer for digital signals affected by distorsions with time varying characteristics.**

(30) Priority: **11.08.83 IT 6786483**

(43) Date of publication of application:
**17.04.85 Bulletin 85/16**

(45) Publication of the grant of the patent:
**12.04.89 Bulletin 89/15**

(84) Designated Contracting States:
**BE CH DE GB LI NL**

(56) References cited:
**ICC '82 - CONFERENCE RECORD OF THE IEEE
INTERNATIONAL CONFERENCE ON
COMMUNICATIONS, Philadelphia, 13th - 17th
June 1982, vol. 2, pages 4B.3.1 - 4B.3.5, IEEE,
New York, US; G. PRIANI et al.:**

**"Multiplicationfree equalizers for multipath
fading channels"**

(73) Proprietor: **SIP Società Italiana per l'Esercizio
Telefonico p.a.
Via San Dalmazzo, 15
I-10122 Turin (IT)**

(72) Inventor: **Pirani, Giancarlo
C.so Mediterraneo, 140
Turin (IT)**
Inventor: **Zingarelli, Valerio
C.so Marconi, 4
Turin (IT)**

(74) Representative: **Riederer Freiherr von Paar zu
Schönau, Anton et al
Van der Werth, Lederer & Riederer Freyung 615
Postfach 2664
D-8300 Landshut (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# EP 0 137 213 B1

**Description**

The present invention concerns apparatuses for telecommunications systems with very high transmission rate and in particular it relates to an adaptive equalizer for digital signals, affected by distorsions with time-varying characteristics, particularly suited to receiving apparatuses in digital radio links.

Digital-technique expansion for signal and data processing has made it necessary, among other things, the development of digital microwave radio links with high capacity.

It is known that electromagnetic wave propagation through the atmosphere is highly dependent on the refractive index of the medium.

Such parameter, which actually is a random variable, varies with altitude and metheorological conditions, causing the formation of the so called "atmospheric ducts" into which electromagnetic waves are canalized.

Moreover there are cases in which a portion of the signal irradiated by the transmitting antenna arrives at the receiving antenna reflected by natural obstacles.

Then it happens that under anomalous propagation conditions the received electromagnetic signal consists of a possible direct ray (the ray which has propagated without undergoing reflections), added to the contribution of all the rays guided by successive reflections.

The combination of these contributions determines amplitude and phase distorsions of the channel transfer function which degrade the transmitted signal characteristics.

The higher the transmission rate and more complex the adopted modulation techniques the higher the resulting degradations due to the distorsions above.

To overcome these disadvantages different techniques of adaptive equalization have been studied which can be subdivided into two big families: intermediate frequency equalization and base band equalization.

Intermediate frequency equalization techniques studied up to now are generally conceptually and technologically simpler with respect to baseband equalization techniques, chiefly for high transmission rate, but they are not able to always assure a good compensation of channel distorsions when:

—selective fadings are associated with a non-mininum phase channel (wherein the signal component with highest amplitude is not that which has undergone the minimum propagation delay);

—distorsions to be compensated for do not coincide with the distorsions the channel usually introduces and for which the equalizer has been designed;

—the differences among the delays of the signal components which are added in reception are great.

On the contrary the baseband equalization technique does not suffer from these limitations. That equalization is in fact capable of compensating for the distorsions even in case of non-minimum phase channels, it requires no definition of a particular channel model and can be efficient even when delay differences among the received signal components are great.

Baseband equalization methods which offer optimal performances (i.e. maximum likelihood estimate of received sequences or Kalman filtering) are very complex to implement, hence they have been applied so far chiefly in modems for data transmission through telephone lines.

At the highest transmission rates presently adopted in digital radio links (140—200 Mbit/s) the choice between baseband systems is limited, due to obvious technological reasons, to decision feedback equalization and to transversal filter equalization.

The main problem of decision feedback filter resides not only in the conceptual and computing complexity of a feedback structure, but also in the possible error propagation. This phenomenon is due to the fact that the symbols outgoing from the decision circuit are used for cancelling the intersymbol interference due to postcursor symbols, so that, if a decision is wrong, instead of the cancellation a double intersymbol interference is obtained and the error probability in the near future is increased.

A number of transversal filter equalization systems for radio links is known cn which the delay line and multipliers are implemented with analog devices (S. Takenaka et alii, "A transversal fading equalizer for a 16-QAM microwave digital radio", IEEE Int. Conference on Communications, Denver, Co, pages 46.2.1—46.2.5, 14—18 June, 1981; Y. L. Kuo et alii, "A baseband adaptive equalizer for a 16-state QAM digital system over master group band analog networks", IEEE Globecom Conference, pages F.3.6.1—F.3.6.5, Miami, Florida, 29 Nov.—2 Dec. 1982; e C. L. Chao et alii "A comparative performance evaluation of slope equalizer and decision-directed weight control equalizers", pages F.3.4.1—F.3.4.7, ibidem).

That makes them rather critical and expensive, as the analog multipliers for high transmission rates are difficult to adjust and of considerable complexity.

Also the transversal filters implemented with usual digital techniques result too complex and expensive at high transmission rates, chiefly owing to the multiplying devices they need. Transversal filters which do not need the use of multipliers and which can therefore be used also in systems with high transmission rates, have been studied for different applications (G. Pirani, V. Zingarelli "Multiplication-free equalizers for multipath fading channels" IEEE International Conf. on Communications, pages 4B.3.1—4B.3.5, Philadelphia, Pa, 13—18 June 1982; G. Pirani et alii "Multiplication-free filters for subband coding of speech", IEEE International Symp. on Circuits and Systems, Rome, 10—14 May 1982) but without the

2

capacity of automatically adapting themselves so as to compensate for time variable distorsions typical of radio channels.

These disadvantages are overcome by the present invention which concerns a method and a device for the adaptive equalization of communications channels wherethrough digital signals are transmitted, which can be set up at the baseband with fully digital techniques, which does not require the use of multipliers and hence it can be applied up to very-high transmission rates, and can automatically be adapted to compensate for time variable distorsions with an adaptation speed sufficient to the transmission requirements of microwave terrestrial radio links.

The equalizer coefficients are in fact computed in real-time according to an optimization algorithm obliging them to be powers of two, so that the operations of multiplication of signal samples by the coefficients of the transversals equalizer are effected by a simple shifting operation of the binary encoded signal samples in a shift register.

The present invention provides a method for the adaptive equalization of digital signals, according to which the signals coming from the transmission channel to be equalized are sampled and encoded and the digital samples are then filtered in a transversal filter having powers-of-two coefficients, characterized in that a block of said samples is extracted at the output of said transversal filter and the above powers-of-two coefficients are adaptively computed in real time by effecting for each coefficient at a frequency inferior or equal to the symbol frequency the difference between the filtered samples and the corresponding decided symbols, then by computing the modulo and sign of said difference and using the sign to effect an operation of exclusive-OR with the sign of the received signal, the exclusive-OR result being used to compute a first parameter $\beta_i(j)$, where the subscript i refers to the ith transversal filter coefficient and index j denotes the jth iteration of the computing process of ith coefficient, by assigning $\beta_i(j)$ a value equal to 1 or 0.5 if the exclusive OR result is equal to logic value 0 or +1 respectively and if the ith transversal filter coefficient at the jth iteration $c_i(j)$ is positive, assigning $\beta_i(j)$ a value equal to 0.5 or 1 if the exclusive-OR result is equal to 0 or +1 respectively and if $c_i(j)$ is negative, and then using the value of parameter $\beta_i(j)$ thus computed and the modulo of $c_i(j)$ to obtain a threshold parameter $S_i(j)$ according to the following formula:

$$S_i(j) = S_0 + S_1 \cdot \beta_i(j) \cdot |c_i(j)|$$

where $S_0$ and $S_1$ are two predetermined constants on which the convergence of coefficient computing algorithm depends, then said threshold parameter $S_i(j)$ being compared with the modulo of said difference and, if this modulo is greater, allowing a counting index to be incremented or decremented according to whether the exclusive-OR result is +1 or 0 respectively and, when the index above exceeds a predetermined value to be reset and to enable the modification of the coefficient $c_1$ of the transversal filter, whose algebraic value is rendered greater or smaller if the above exclusive-OR result is 0 or +1 respectively, and to be then sent to the transversal filter.

The present invention provides also the adaptive equalizer apt to implement the method.

The above and further characteristics of the present invention will be made clearer by the following description of a preferred embodiment thereof, given by way of example and not in a limiting sense, and by the annexed drawings in which:

Fig. 1 is a comprehensive scheme of the receiving system in which the adaptive equalizer is used;

Fig. 2 is a block diagram of the transversal filter structure used in the adaptive equalizer;

Fig. 3 is a block diagram of the device denoted by DA in Fig. 1.

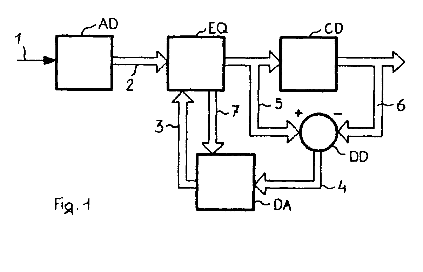

In Fig. 1, AD denotes an analog-to-digital converter converting the analog signal arriving from channel 1 into a series of samples represented by n-bit binary words. The sampling rate is equal at least to the symbol rate. At the output of AD, denoted by 2, there is connected the equalization digital transversal filter EQ. DA denotes the device for computing and updating the transversal filter coefficients c, supplied through bus 3.

DA input signal is supplied through connection 4 by device DD which computes the difference between the signal outgoing from EQ on bus 5 and the signal outgoing from a decision device CD, on connection 6. Besides DA receives through connection 7 the signs of the received signal samples present in filter EQ.

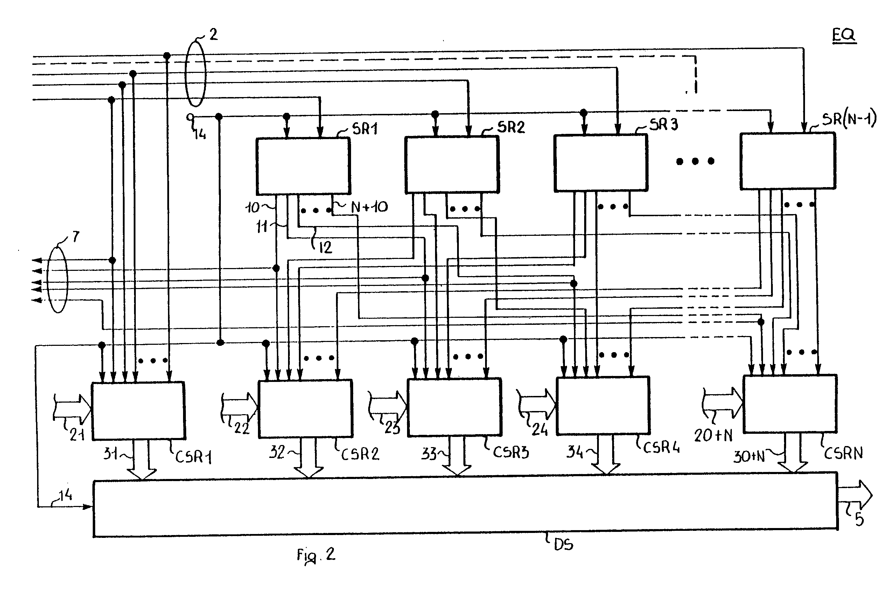

The structure of the digital transversal filter is shown in Fig. 2. The n-bit binary words, coming from the analog-to-digital converter through n-wire connection 2, access a digital delay line composed of $N-1$ delay cells, implemented with shift-registers SR1, SR2 . . . SR $(N-1)$ where N is the number of coefficients c of the filter.

Let us suppose that the modulo and sign of signal samples present on connection 2 are represented with binary words, that each wire of connection 2 carries a bit of the words above and in particular that the sign bit is that sent to SR1 series input. By this hypothesis the wires outgoing from SR1 supply the sign bits and form connection 7, connected to one of the inputs of device DA (Fig. 1).

Each bit accesses the serial input of the corresponding register SR (the first bit accesses SR1, the second bit accesses SR2, and so on) and at each clock pulse on wire 14 (Fig. 2), with a frequency equal to the symbol frequency, is subsequently transferred from the first to the last output wire, respectively denoted by 10, 11, 12 . . . N+10 for SR1.

Each of the N output wires of registers SR is connected to the respective input of the parallel type of

3

other shift registers, denoted by CSR2, CSR3, CSR4 . . . CSRN (CSR2 is connected to the first output of all the registers SR, CSR3 is connected to the second output of all the registers SR, etc.).

Shift registers CSR, with parallel input and output, effect the multiplications by powers-of-two corresponding to the transversal filter coefficients, effecting the necessary shift operations on the word coming from the delay line. The shift number is equal to the exponent of the respective power-of-two coefficient.

The information relating to the exponent value is transferred to registers CSR through connections 21, 22, 23, 24 . . . 20+N, forming bus 3.

The word at the input of each of the above registers CSR arrives at the output shifted by a number of positions equal to the coefficient exponent.

Register CSR1 differs from the others only in the connection of the input leads, directly connected to bus 2. The binary words at the parallel outputs of registers CSR, connected to connections 31, 32, 33, 34 . . . 30+N, are finally added up by binary adder DS. The result is present on connection 5 and consists of an m-bit binary word.

The shift operation effected by registers CSR may also be implemented through some multiplexers interconnecting n input wires and m output wires. Connections of particular input wires with particular output wires are determined by coefficient values. Shift speed can thus be increased, even if a greater circuit complexity is required.

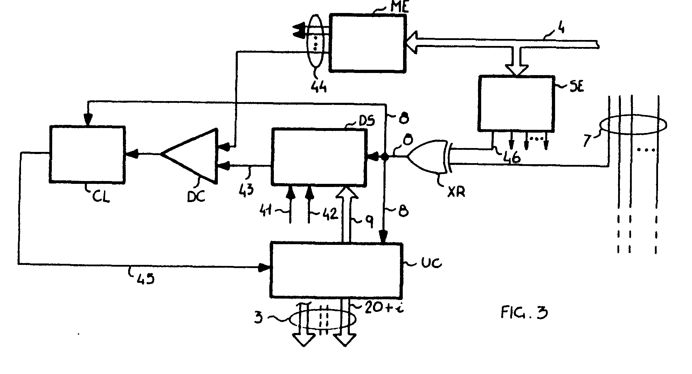

Fig. 3 represents a circuit for updating the generic ith coefficient. It is comprised in the device denoted by DA in Fig. 1. This circuit has the task of adaptively computing the ith coefficient $c_i$ of the transversal filter in order to minimize the mean square error between the transmitted symbol $a(j)$ present at the output of the decision device and the sample of signal $y(j)$ at the filter output.

In particular the adaptation method implemented by DA derives from the known estimated gradient algorithm. According to that algorithm coefficients can be updated according to the following iterative formula:

$$c_i(j+1)=c_i(j)-k \cdot e(j) \cdot r_i$$

where:

$c_i(j+1)$ is the ith filter coefficient at the $(j+1)$th iteration;

$e(j)$ is the error signal at the jth iteration between signal $y(j)$ at the filter output and signal $a(j)$ at the output of the decision device, i.e. $e(j)=y(j)-a(j)$;

$r_i$ is the sample of the received signal, delayed by "i" fundamental periods;

k is a range factor controlling the convergence speed of the coefficient computation.

The iterative formula for updating the coefficients, on which the method implemented by DA is based, is the following:

$$c_i(j+1)=c_i(j)-k \ \text{sign} \ [e(j)] \cdot \text{sign} \ (r_i)$$

where the function sign ( . . . ) returns the sign of the argument.

The expression above, in order to obtain power-of-two coefficients, is further modified as follows:

$$c_i(j+1)=c_i(j)-\alpha_i(j) \cdot c_i(j),$$

where $\alpha_i(j)$ is the new range factor which can assume values 0, 0.5 or $-1$ according to the circumstances that coefficient $c_i(j)$ is not to be modified or is to be divided or multiplied by two, respectively.

In this way coefficient $c_i(j+1)$ can assume only the following three values of powers of two:

$c_i(j+1)=c_i$, when $\alpha_i(j)=0$;
$c_i(j+1)=c_i(j)/2$, when $\alpha_i(j)=0.5$;
$c_i(j+1)=2 \ c_i(j)$, when $\alpha_i(j)=-1$.

The three values of $\alpha_i(j)$ are determined by the following rules:

1) A coefficient is modified, i.e. $\alpha_i(j)\neq0$, if $|e(j)|>S_i(j)$ and if a counting index $k_i(j)$ exceeds a predetermined value $K_i$; index $k_i(j)$ is updated as follows:

$k_i(j+1)=k_i(j)+\text{sign} \ [e(j+1)] \cdot \text{sign} \ (r_i),$
$S_i(j)$ is a threshold which is determined according to the rule described at the following point 2).

2) Coefficient $c_i(j)$ is given a greater algebraic value if sign $(e(j)) \cdot$ sign $(r_i)<0$; on the contrary $c_i(j)$ is given an inferior algebraic value if sign $(e(j)) \cdot$ sign $(r_i)>0$. It follows that threshold parameter $S_i(j)$ is to be determined according to the following rule:

$S_i(j)=S_0+S_1 \cdot \beta_i(j) \cdot |c_i(j)|$ where parameter $\beta_i(j)$ has the following values:

$\beta_i(j)=1$, if sign $(e(j)) \cdot$ sign $(r_i)<0$ and if $c_i(j)>0$;
$\beta_i(j)=0.5$ if sign $(e(j)) \cdot$ sign $(r_i)>0$ and if $c_i(j)>0$;
$\beta_i(j)=0.5$ if sign $(e(j))$ sign $(r_i)<0$ and if $c_i(j)<0$;
$\beta_i(j)=1$, if sign $(e(j))$ sign $(r_i)>0$ and if $c_i(j)<0$;

and where $S_0$ and $S_1$ are two predetermined constants controlling coefficient convergence speed. Typical values can be $S_0=0$, $S_1=1$.

3) $\alpha_i(j)=-1$, i.e. $c_i(j)$ is doubled, if

sign $(e(j)) \cdot$ sign $(r_i)<0$ and if $c_i(j)>0$;

$\alpha_i(j)=0.5$, i.e. $c_i(j)$ is halved if

sign $(e(j)) \cdot$ sign $(r_i)>0$ and if $c_i(j)>0$;

$\alpha_i(j)=0.5$, i.e. $c_i(j)$ is doubled in algebraic value and halved in absolute value if

sign $(e(j)) \cdot$ sign $(r_i)<0$ and if $c_i(j)<0$;

$\alpha_i(j)=-1$, i.e. $c_i(j)$ is halved in algebraic value and doubled in absolute value if

sign $(e(j)) \cdot$ sign $(r_i)>0$ and if $c_i(j)<0$;

$\alpha_i(j)=0$, i.e. $c_i(j)$ is unmodified if $|e(j)|<S_i(j)$.

At the input of the ith circuit of device DA, connected to connection 4, there is the signal corresponding to error $e(j)$ at the ith iteration, and at the input connected to connection 7 there are sign bits of signal $r_i$, present at the input of register $CSR_i$ (Fig. 2). Error signal $e(j)$ is sent both to a device SE (Fig. 3), which detects the algebraic vaue of $e(j)$, and to a device ME, supplying a voltage proportional to the absolute value of $e(j)$.

These two blocks SE and ME are common to all coefficient updating circuits. In fact each of them has so many connections at the output, denoted as a whole by 46, 44 respectively as the filter coefficients are.

The figure shows the updating circuit devoted to the ith coefficient. The inputs of other circuits are connected to the respective wires of bus 7, of connection 46 and of connection 44.

SE output is sent together with the ith bit of sign $r_i$, previously denoted by sign $(r_i)$, at the inputs of an exclusive OR logic gate XR. At the output of this gate there is the signal "sign $e(j) \oplus$ sign $(r_i)$", necessary to compute the coefficients, which is sent through connection 8 to a device DS, apt to calculate threshold $S_i(j)$, according to the already described formulae. DS needs also the values of coefficients $c_i(j)$, supplied through bus 9 by a computing unit UC, and of constants $S_0$ and $S_1$, supplied from the outside through wires 41 and 42; parameter values $\alpha_i(j)$ are supplied to DS by unit UC through bus 9.

The signal proportional to threshold value $S_i(j)$, present at the output connected to connection 43, is compared with the absolute value of error $e(j)$, present at the output 44 of device ME, through comparison circuit DC. The signal supplied by DC at its output, proportional to the comparison result, enables a counter CL of modulo $K_i$, which counts up or down according to the signal value on wire 8 at the output of XR. The enabling takes place when $e(j)$ absolute value exceeds threshold value $S_i(j)$.

When the counter attains value $K_i$, it sends a suitable signal to computing unit UC through connection 45 and resets.

Unit UC computes the ith power-of-two coefficient of filter EQ according to the previously-mentioned criteria. In particular UC computes the value of $\alpha_i(j)$, (which can be 0.5 and $-1$) on the basis of the signal outgoing from XR, on wire 8, and supplies it, together with the coefficient of the preceding iteration to device DS through bus 9. Then it decides the modification of coefficient $c_i(j)$ when it receives the control signal from counter CL through connection 45. The ith computed coefficient is supplied to the filter through bus $20+i$, which is a part of bus 3.

By the described adaptive equalizer, one can track the typical variations of the microwave radio channel. In fact radio channels subject to selective fadings have an amplitude variation rate non higher than 100 dB/s. If the transmission rate is, by instance, of 35 Mbaud, which corresponds to a symbol period equal to about 30 ns, the channel amplitude variation in a symbol period is at worst of about 3 μdB. That is why before the amplitude distorsion of the channel changes by some tenth decibels, some thousand symbols are received, which permits the described adaptive equalizer to adapt the coefficients.

The above description has been given only by way of example, and not in a limiting sense. Variations and modifications could be made while remaining within the scope of the invention.

In particular device DA can effect the operations concerning coefficient updating either in correspondance with each symbols at the transversal output, or every predetermined symbol number, less fast components being usable in this case.

Generally the performances do not degrade by updating after some thousand symbols, as said above.

## Claims

1. Method for the adaptive equalization of digital signals, according to which the signals coming from the transmission channel (1) to be equalized are sampled and encoded and the digital samples are then filtered in a transversal filter (EQ) having powers-of-two coefficients, characterized in that a block of said samples is extracted at the output of said transversal filter (EQ) and the above powers-of-two coefficients are adaptively computed in real time by effecting for each coefficient at a frequency inferior or equal to the symbol frequency the difference between the filtered samples and the corresponding decided symbols, then by computing the modulo and sign of said difference and using the sign to effect an operation of exclusive OR with the sign of the received signal, the exclusive-OR result being used to compute a first parameter $\beta_i(j)$, where the subscript i refers to the ith transversal filter coefficient and index j denotes the jth interation of the computing process of ith coefficient, by assigning $\beta_i(j)$ a value equal to 1 or 0.5 if the exclusive OR result is equal to logic value 0 or +1 respectively and if the ith transversal filter coefficient at the jth iteration $c_i(j)$ is positive, assigning $\beta_i(j)$ a value equal to 0.5 or 1 if the exclusive-OR result is equal to 0 or +1 respectively and if $c_i(j)$ is negative, and then using the value of parameter $\beta_i(j)$ thus computed and the modulo of $c_i(j)$ to obtain a threshold parameter $S_i(j)$ according to the following formula:

$$S_i(j)=S_0+S_1 \cdot \beta_i(j) \cdot |c_i(j)|$$

where $S_0$ and $S_1$ are two predetermined constants on which the convergence speed of coefficient computing algorithm depends, then said threshold parameter $S_i(j)$ being compared with the modulo of said difference, and if this modulo is greater, allowing a counting index to be incremented or decremented according to whether the exclusive OR result is +1 or 0 respectively and, when the index above exceeds a predetermined value, to be reset and to enable the modification of the coefficient $c_i$ of the transversal filter, whose algebraic value is rendered greater or smaller if the exclusive OR result is 0 or +1 respectively, and to be then sent to the transversal filter (EQ).

2. An adaptive equalizer for digital signals, comprising a digital-to-analog converter (AD) for converting the input analog signal into a series of digital samples, a transversal filter (EQ) for filtering the samples above and a decision circuit (CD) for extracting the corresponding symbols, characterized in that it comprises:

—a difference device (DD), for effecting the difference between the serial signals supplied by the transversal filter and the signals supplied by the decision circuit;

—a sign detecting device (SE), connected to the output of the difference device and equipped with as many outputs as the coefficients of the transversal filter are;

—a number of exclusive-OR logic gates (XR) equal to the coefficient number, which receive at an input the signal present at an output of the sign detecting device and at the other input the sign of the received signal extracted from the corresponding sign cell of the transversal filter (EQ);

—a number of devices (DS) for determining thresholds equal to the coefficient number, each device presenting an input connected to the output of the corresponding exclusive-OR logic gate, an input connected to a computing unit (UC) and two inputs which can be accessed from the outside for loading constants $(S_0, S_1)$;

—a modulo extracting device (ME), connected to the difference device output and equipped with as many outputs as the transversal filter coefficients are:

—a number of comparison circuits (DC), equal to the coefficient number, each circuit presenting an input connected to the output of the corresponding device for computing the thresholds and the other input to the corresponding output of the modulo extracting device;

—a number of up-down counters (CL) each for incrementing or decrementing said counting index according to the logic value of the signal supplied by the corresponding exclusive-OR logic gate, when it is enabled by the corresponding comparison circuit, the counting modulo being equal to said predetermined number (K), which, once reached, causes each counter to be reset and to emit an enabling signal for a corresponding computing unit (UC);

—a number of computing units (UC), each apt to compute a coefficient $(c_i(j))$ of the transversal filter (EQ), to determine a parameter on the basis of the signal received from the corresponding exclusive-OR logic gate and to decide, on the basis of the value of said determined parameter and of the end-of-counting signal arriving from the corresponding counter, whether to double, halve the previous efficient or let it unchanged.

**Patentansprüche**

1. Verfahren zur adaptiven Entzerrung digitaler Signale, wobei man die von Sendekanal (1) kommenden, zu entzerrenden Signale abtastet und codiert und dann die digitalen Abtastwerte in einem Transversalfilter (EQ) mit Koeffizienten gleich Potenzen von 2 filtert, dadurch gekennzeichnet, daß man am Ausgang (5) des Transversalfilters (EQ) einen Block der Abtastwerte extrahiert und die Koeffizienten gleich Potenzen von 2 adaptiv in Realzeit berechnet, indem man: für jeden Koeffizienten mit einer Frequenz, die niedriger als die oder gleich der Symbolfrequenz ist, die Differenz (in DD) zwischen den gefilterten Abtastwerten (auf 5) und den entsprechenden durch die Entscheidungsschaltung ermittelten Symbolen (auf 6) bildet, dann den Betrag und das Vorzeichen dieser Differenz berechnet, das Vorzeichen zur Durchführung einer Exclusiv-ODER-Verarbeitung mit dem Vorzeichen des empfangenen Signals verwendet und das Ergebnis dieser Exclusiv-ODER-Verarbeitung zum Berechnen eines ersten Parameters $\beta_i(j)$ verwendet, wobei der Tiefindex i den i-ten Transversalfilterkoeffizienten bezeichnet und der Klammerindex j den j-ten Schritt des Bestimmungsprozesses des i-ten Koeffizienten angibt, indem man weiterhin dem Parameter $\beta_i(j)$ einen Wert von 1 oder 0,5 zuweist, wenn das Exclusiv-ODER-Ergebnis den logischen Wert 0 bzw. +1 hat und der i-te Transversalfilterkoeffizient beim j-ten Schritt $c_i(j)$ positiv ist, und man $\beta_i(j)$ den Wert 0,5 oder 1 zuweist, wenn das Exclusiv-ODER-Ergebnis 0 bzw. +1 ist und $c_i(j)$ negativ ist, und dann den Wert des so bestimmten Parameters $\beta_i(j)$ und den Betrag von $c_i(j)$ dazu verwendet, einen Schwellenparameter $S_i(j)$ entsprechend der folgenden Formel zu erhalten:

$$S_i(j)=S_0+S_1 \cdot \beta_i(j) \cdot |c_i(j)|$$

wobei $S_0$ und $S_1$ zwei vorbestimmte Konstanten sind, von denen die Konvergenzgeschwindigkeit des Koeffizientenberechnungsalgorithmus abhängt; indem man dann den Schwellenparameter ($S_i(j)$ mit dem Betrag der Differenz vergleicht und, wenn der Betrag größer ist, einen Zählindex aufsteigen oder absteigen läßt abhängig davon, ob das Exclusiv-ODER-Ergebnis +1 bzw. 0 ist, und, wenn dieser Zählindex einen bestimmten Wert überschreitet, man ihn zurückstellt und eine Änderung des Koeffizienten $c_i$ des Transversalfilters, dessen algebraischer Wert größer oder kleiner gemach wird in Abhängigkeit davon, ob das Exclusiv-ODER-Ergebnis 0 bzw. +1 ist, durchführen läßt; und man dann den Koeffizienten zum Transversalfilter (EQ) sendet.

2. Adaptiver Entzerrer für digitale Signale, mit einem Digital/Analog-Umsetzer (AD) zum Umsetzen des analogen Eingangsignals in eine Reihe digitaler Abtastwerte, einem Transversalfilter (EQ) zum Filtern dieser Abtastwerte und einer Entscheidungsschaltung (CD) zum Extrahieren der entsprechenden Symbole, dadurch gekennzeichnet, daß er noch folgende Bestandteile enthält:

—einen Differenzbildner (DD), der die Differenz zwischen den vom Transversalfilter gelieferten seriellen Signalen und den von der Entscheidungsschaltung gelieferten Signalen bildet;

—eine Vorzeichendetektorvorrichtung (SE), die mit dem Ausgang des Differenzbildners verbunden ist und so viele Ausgänge aufweist, als es Koeffizienten des Transversalfilters gibt;

—logische Exclusiv-ODER-Glieder (XR) in einer Anzahl gleich der Zahl der Koeffizienten, die an einem Eingang das an einem Ausgang der Vorzeichendetektorvorrichtung liegende Signal und am anderen Eingang das von der entsprechenden Vorzeichenzelle des Transversalfilters (EQ) extrahierte Vorzeichen des empfangenen Signals empfangen;

—Vorrichtungen (DS) zum Bestimmen von Schwellen in einer Anzahl gleich der Zahl der Koeffizienten, wobei jede Vorrichtung einen mit dem Ausgang des entsprechenden Exclusiv-ODER-Glieds verbundenen Eingang und einen mit einer Recheneinheit (UC) verbundenen Eingang sowie zwei von außen für das Landen mit Konstanten ($S_0$, $S_1$) zugängliche Eingänge aufweist;

—eine Betragextrahiervorrichtung (ME), die an den Ausgang des Differenzbildners angeschlossen ist und mit so vielen Ausgängen versehen ist, als es Transversalfilterkoeffizienten gibt;

—Komparatorschaltungen (DC) in einer Anzahl gleich der Zahl der Koeffizienten, von denen jede einen mit dem Ausgang der entsprechenden Vorrichtung zum Berechnen der Schwellen verbunden Eingang und einen mit dem entsprechenden Ausgang der Betragextrahiervorrichtung verbundenen Eingang aufweist;

—eine Anzahl von Auf- und Ab-Zählern (CL) jeweils zum Erhöhen oder Erniedrigen des Zählindex gemäß dem logischen Wert des von dem entsprechenden Exclusiv-ODER-Glied gelieferten Signals, wenn er von der entsprechenden Komparatorschaltung angesteuert ist, wobei der Zählbetrag gleich der vorgegebenen Nummer (K) ist, die, wenn sie einmal erreicht ist, bewirkt, daß jeder Zähler zurückgestellt wird und ein Ansteuersignal für eine entsprechende Recheneinheit (UC) abgibt;

—eine Anzahl der Recheneinheiten (UC), von denen jede in der Lage ist, einen Koeffizienten [$c_i(j)$] des Transversalfilters (EQ) zu berechnen, einen Parameter auf der Basis des vom entsprechenden Exclusiv-ODER-Glied empfangenen Signals zu bestimmen und auf der Grundlage des Werts dieses bestimmten Parameters und des vom entsprechenden Zähler eintreffenden Zählendesignals zu entscheiden, ob der vorhergehende Koeffizient zu verdoppeln, zu halbieren oder unverändert zu lassen ist.

## Revendications

1. Méthode pour l'égalisation adaptative des signaux numériques, suivant laquelle les signaux à égaliser qui, proviennent de la voie de transmission (1) sont échantillonnés et codés et ensuite les échantillons numériques sont filtrés par un filtre transversal (EQ) ayant des coefficients qui sont des puissances de deux, caractérisée en ce qu'on prélève un bloc desdits échantillons à la sortie dudit filtre transversal (EQ) et l'on calcule en temps réel et en mode adaptatif les coefficients qui sont des puissances de deux, en effectuant, à une fréquence plus basse ou égale à celle du symbole et pour chaque coefficient, la différence entre les échantillons filtrés et les symboles correspondants décidés, en calculant ensuite le module et le signe de ladite différence, et en utilisant le signe pour effectuer une opération de OU exclusif avec le signe du signal reçu, le résultat du OU exclusif étant utilisé pour calculer un premier paramètre $\beta_i(j)$, où l'indice i se rapporte au coefficient ième du filtre transversal et le symbole j indique la jème itération du procédé de calcul du coefficient ième, en attribuant à $\beta_i(j)$ une valeur égale à 1 ou à 0,5 si le résultat du OU exclusif vaut une valeur logique de 0 ou +1 respectivement et si le ième coefficient du filtre transversal à la jème itération $c_i(j)$ est positif, en attribuant à $\beta_i(j)$ une valeur égale à 0,5 ou à 1 si le résultat du OU exclusif vaut 0 ou +1 respectivement et si $c_i(j)$ est négatif, et en utilisant ensuite la valeur du paramètre $\beta_i(j)$ ainsi calculé et le module de $c_i(j)$ pour obtenir un paramètre de seuil $S_i(j)$ suivant la formule suivante:

$$S_i(j)=S_0+S_1 \cdot \beta_i(j) \cdot |c_i(j)|,$$

où $S_0$ et $S_1$ sont deux constantes prédéterminées dont dépend la rapidité de convergence de l'algorithme de calcul des coefficients, ledit paramètre de seuil $S_i(j)$ étant ensuite comparé avec le module de ladite différence et, si ce module le dépasse, en permettant à un indice de comptage d'être augmenté ou réduit suivant que le résultat de OU exclusif est +1 ou 0 respectivement et, lorsque ledit indice dépasse une valeur préfixée, d'être mis à zéro et de valider la modification du coefficient $c_i$ du filtre transversal, qui est rendu plus grand ou plus petit en valeur algébrique, si le résultat de OU exclusif est 0 ou +1 respectivement, pour être enfin envoyé au filtre transversal (EQ).

2. Egaliseur adaptatif pour signaux numériques, qui comprend un convertisseur analogique-numérique (AD), apte à convertir le signal analogique en entrée dans une série d'échantillons numériques, un filtre transversal (EQ), apte à filtrer lesdits échantillons et un circuit de décision (CD), apte à recouvrer les symboles correspondants, caractérisé en ce qu'il comprend:

—un dispositif de différence (DD), apte à effectuer la différence entre les signaux fournis sériellement par le filtre transversal et les signaux fournis par le circuit de décision;

—un dispositif détecteur de signe (SE) connecté à la sortie du dispositif de différence et pourvu d'autant de sorties qu'il y a de coefficients du filtre transversal;

—une pluralité de portes logiques du type OU exclusif (XR), dont le nombre est égal à celui des coefficients, qui reçoivent à une entrée le signal présent à une sortie du dispositif détecteur de signe et, à l'autre entrée, le signe du signal reçu, prélevé de la cellule correspondante des signes du filtre transversal (EQ);

—une pluralité de dispositifs (DS) pour la détermination des seuls, dont le nombre est égal au nombre des coefficients, chaque dispositif présentant une entrée connectée à la sortie de la porte logique correspondante du type OU exclusif, une entrée connectée à une unité de calcul (UC) et deux entrées accessibles de l'extérieur pour stocker les constantes $(S_0, S_1)$;

—un dispositif extracteur de module (ME), connecté à la sortie du dispositif de différence et pourvu d'autant de sorties qu'il y a de coefficients du filtre transversal;

—une pluralité de circuits de comparaison (DC), dont le nombre est égal au nombre de coefficients, chaque circuit présentant une entrée connectée à la sortie du dispositif correspondant pour le calcul des seuls et l'autre entrée connectée à la sortie correspondante du dispositif extracteur de module;

—une pluralité de compteurs-décompteurs (CL), aptes chacun à augmenter ou à réduire ledit indice de comptage suivant la valeur logique du signal fourni par la porte logique correspondante du type OU exclusif, lorsqu'il est validé par le circuit de comparaison correspondant, le module de comptage étant égal audit nombre prédéterminé (K), qui, dès qu'il a été atteint, amène chaque compteur à être mis à zéro et à émettre un signal de validation pour une unité de calcul correspondante (UC);

—une pluralité d'unités de calcul (UC), aptes chacune à calculer un coefficient $[c_i(j)]$ du filtre transversal (EQ), à déterminer un paramètre sur la base du signal reçu de la porte logique correspondante de type OU exclusif, et à décider, sur la base de la valeur dudit paramètre déterminé et du signal de fin de comptage arrivant du compteur correspondant, s'il faut doubler le coefficient précédent ou le faire la moitié ou le laisser inchangé.

Fig. 1

Fig. 2

FIG. 3